# EUROPÄISCHE PATENTSCHRIFT

(11) **EP 2 950 016 B1**
(45) Veröffentlichungstag und Bekanntmachung des Hinweises auf die Patenterteilung: **01.05.2019**
(21) Anmeldenummer: 14170533.5
(22) Anmeldetag: 30.05.2014
(51) Int. Cl.: F24F 13/20, F16L 37/56, F24D 3/16, F24F 5/00, F24D 19/00

(54) **System aus einer einbetonierbaren Wassersteckdose für ein Kühlsegel und einem Anschlussmodul**
system comprising a water socket being embeddable in concrete for a cooling panel and a connection modul
Système comprenant une prise d'eau encastrable dans le béton pour un panneau refroidissant et un module de connection

(43) Veröffentlichungstag der Anmeldung: 02.12.2015
(73) Patentinhaber: AFRISO-Euro-Index GmbH, 74363 Güglingen (DE)
(72) Erfinder: Thomas Heinz, 74374 Zaberfeld (DE); Nadine Grob, 74906 Bad Rappenau (DE)
(74) Vertreter: Kohler Schmid Möbus Patentanwälte

(56) Entgegenhaltungen:
- EP-A1- 0 669 504
- EP-A2- 2 322 862
- DE-U1- 8 427 228
- DE-U1- 29 617 728
- US-A- 3 776 272

## Beschreibung

Die vorliegende Erfindung betrifft ein System aus einer einbetonierbaren Wassersteckdose für ein Kühlsegel und einem Anschlussmodul.

Für die Kühlung von Räumen werden in der Gebäudetechnik an der Decke hängende Kühlsegel verwendet. Die Kühlung des Raums wird dadurch erreicht, dass durch das Kühlsegel kälteres Wasser (leicht oberhalb des Taupunktes) geleitet wird, welches in der Lage ist, Raumwärme aufzunehmen, und dann entsprechend erwärmt wieder über die Decke zurück zur Kühl- bzw. Heizzentrale geleitet wird. Bei individuell genutzten Büro- oder gewerblich genutzten Räumen besteht die Möglichkeit, diese Kühlsegel nach Bedarf anzubringen oder wieder abzubauen. Um dies flexibel zu realisieren, wurden Wassersteckdosen (z.B. thermische Steckdose der Fa. Uponor unter dem Produktnamen Contec-TS) entwickelt, durch welche eine schnelle hydraulische Verbindung hergestellt werden kann. Charakteristisch für die Wassersteckdose ist, dass durch Einstecken eines Gegensteckers der Kühlsegelleitung in die Wassersteckdose die unter Druck stehenden hydraulische Fluidverbindung hergestellt wird, da über den Gegenstecker das Vorlauf(VL)- und das Rücklauf(RL)-Ventil geöffnet wird.

Nachteil dieser bekannten Wassersteckdose sind die hohen Herstellungskosten aufgrund des konstruktiven Aufbaus und das hohe Gewicht aufgrund eines massiven Verteilerblocks aus Messing. Zudem wird ein einfacher Anschlussstecker als Verbindungstechnik zur Wassersteckdose verwendet, über den ein individueller Anschluss des Kühlsegels mit handelsüblichen Armaturenteilen möglich ist. Diese Individuallösungen sind sehr unterschiedlich und entsprechend kostenaufwendig. Der Anschluss einer Wassersteckdose erfolgt über einen Verteiler, über welchen der hydraulische Abgleich erfolgen kann, oder über eine Vor- und Rücklaufleitung in der Betondecke, an welcher mehrere Wassersteckdosen angeschlossen werden, ohne dass hier ein hydraulischer Abgleich vorgesehen ist.

Aus EP 0 669 504 A1 ist eine Anschlussdose für die Heizkörperanbindung bekannt, bei der der Heizkörper zu einem späteren Zeitpunkt montiert werden kann. Diese bekannte Anschlussdose wird nicht einbetoniert, sondern unter Putz angeordnet. Der Anschluss des Heizkörpers erfolgt über eine geschraubte Standard-Rohrverbindung, bei welcher die Rohre einzeln montiert werden.

Aus EP 2 322 862 A2 ist eine thermische Anschlussdose bekannt, um den Anschluss eines Kühlsegels vorzunehmen. Diese Anschlussdose ist nicht zum Einbetonieren geeignet, da das Gehäuse einseitig offen ist und die Abdichtung beim Einbetonieren dem Installateur überlassen wird. Eine Abdeckung im Leerzustand oder für die spätere Anschlussrohrdurchführung ist nicht vorhanden, so dass das Innere der Anschlussdose optisch sichtbar bleibt.

Weiterhin ist aus US 3 776 272 A eine Aufputz-Anschlussdose für eine Heizkörperanbindung bekannt, die nicht einbetoniert wird. Die Anbindung des Heizkörpers an die Anschlussdose erfolgt mit einer Einrohr-Anschlussarmatur, an welche spezielle Nippel aufgeschraubt sind, damit beim Fügen die Rückschlagventile am Gehäuse geöffnet werden können. Die Einrohrarmatur bildet in Verbindung mit den aufgeschraubten Nippeln und den beiden zusätzlichen Verbindungsschrauben einen Stecker, welcher am Heizkörper befestigt ist.

Aus DE 84 27 228 U1 ist ferner eine Unterputz Anschlussdose für einen Wasseranschluss im Trinkwasserbereich bekannt. Dabei wird für den Warm- bzw. Kaltwasseranschluss jeweils eine Dose benötigt. Ein solches System wird angewendet, wenn z.B. der Kaltwasseranschluss von einem Anschluss über den anderen Anschluss weitergeschleift wird. Dies ist vor allem in einem Badezimmer sinnvoll, wo in der Regel mehrere Anschlüsse dicht beieinander platziert werden. Bei der Dose handelt es sich um ein T-Stück mit Rohranschluss in einem Gehäuse.

Schließlich offenbart DE 296 17 728 U1 eine Anschlussarmatur für die Heizkörperanbindung, wobei die Armatur direkt in die Wand eingeputzt oder auf dem Putz angeschraubt wird. Der Anschluss des Heizkörpers erfolgt über eine geschraubte Standard-Rohrverbindung, bei welcher die Rohre einzeln montiert werden.

Aufgabe der Erfindung ist es, ein Anschlusssystem mit einer kostengünstig herstellbaren Wassersteckdose bereitzustellen, welches allen Anforderungen gerecht wird.

Diese Aufgabe wird erfindungsgemäß durch ein System aus einer einbetonierbaren Wassersteckdose für ein Kühlsegel und einem Anschlussmodul mit den Merkmalen von Anspruch 1 gelöst. Bevorzugte Ausführungen der Erfindung sind in den abhängigen Ansprüche definiert.

In der ersten erfindungsgemäßen Variante ist die Wassersteckdose mehrteilig aus dem Steckdosengehäuse und den zwei Winkelrohren gebildet. Diese Bauart hat den Vorteil, dass verschiedene Rohranschlüsse mit relativ wenig Werkzeugaufwand realisiert werden können. Außerdem sind die Winkelrohre und das Steckdosengehäuse voneinander drucktechnisch entkoppelt, so dass ein Riss im Steckdosengehäuse, der aufgrund eines Hammerschlags beim Nageln der Steckdosengehäuse an eine Deckenverschalung auftreten kann, nicht zu einer Beschädigung der Winkelrohre führt. Die Winkelrohre sind vorzugsweise aus Kunststoffrohre, zumal die Montage der Kühlsegel und der Wassersteckdose über Kopf erfolgt und daher möglichst geringe Bauteilgewichte von Vorteil sind. In der zweiten erfindungsgemäßen Variante ist die Wassersteckdose einteilig aus dem Steckdosengehäuse mit den darin integrierten Vor- und Rücklaufleitungen gebildet.

Vorzugsweise umfasst das Kupplungsventil eine Ventilhülse, welche im axialen Leitungsabschnitt montiert ist, einen Ventilstößel und eine Schließfeder, durch welche der Ventilstößel nach unten in eine geschlossene Ventilstellung vorgespannt ist. Besonders bevorzugt durchgreift ein mittlerer Abschnitt des Ventilstößels die Ventilhülse, während das obere Stößelende einen Dichtring trägt, der mit einem Ventilsitz der Ventilhülse zusammenwirkt, und das untere Stößelende im axialen Leitungsabschnitt verschiebbar geführt ist, um durch einen Gegenstecker nach oben verschoben zu werden. Die Ventilhülsen und die Gegenstecker sind im axialen Leitungsabschnitt außenseitig abgedichtet, so dass im Ventilgehäuse keine internen Dichtstellen nach außen vorhanden sind. Idealerweise sind die VL- und RL-Kupplungsventile identisch ausgeführt.

Vorteilhaft weist die Wassersteckdose eine Demontageeinrichtung auf, um ein Bodendeckel aus der Bodenöffnung zu entfernen. Im einfachsten Fall ist die Demontageeinrichtung durch einen Schlitz im Bodendeckel oder im Öffnungsrand gebildet, um den Bodendeckel aus der Bodenöffnung mithilfe eines Werkzeugs heraushebeln zu können. Besonders bevorzugt weist die Demontageeinrichtung eine Schraube, auf der der Bodendeckel drehbar, aber axial unverschiebbar gehalten ist, und eine im Steckdosengehäuse drehfest und axial fixierte Mutter auf, in die die Schraube eingeschraubt ist. Durch Herausdrehen der Schraube aus der gehäusefesten Mutter wird der Bodendeckel aus der Bodenöffnung herausgedrückt und lässt sich leicht abnehmen.

Das Anschlussmodul weist insbesondere mindestens eine der folgenden Komponenten im Vor- oder Rücklauf auf: Durchflussmesser, Hubventil, manuell betätigbares Absperrventil, motorisch oder mit thermischem Stellantrieb betätigbares Absperrventil.

Vorzugswiese weist das Anschlussmodul, insbesondere ein Bodendeckel, eine Kodierung auf, die eine bzgl. Vor- und Rücklauf richtige Montage des Anschlussmoduls in der Bodenöffnung des Steckdosengehäuses sicherstellt. Mit anderen Worten sind Anschlussmodul und Wassersteckdose so ausgeführt, dass sie nur in einer von mehreren möglichen Stellungen passen.

Besonders bevorzugt weist das Steckdosengehäuse einen Leerrohranschluss für eine zusätzliche elektrische Verkabelung auf. Der Leerrohranschluss kann zunächst noch mit einem Durchbrechboden verschlossen sein, der erst bei Bedarf geöffnet wird. Der Leerrohranschluss wird vorteilhaft in die gleiche Richtung geführt, wie die Rohranschlüsse an der Wassersteckdose angebracht sind, um größtmögliche Flexibilität in der Betondecke mit begrenzten Platzverhältnissen zu haben. Durch den Leerrohranschluss kann an einer Schnittstelle die elektrische und hydraulische Verbindung hergestellt werden. Dazu war bisher eine zusätzliche elektrische Anschlussdose notwendig, welche relativ nahe zur Wassersteckdose angebracht werden musste. Dies stellt vor allem ein optisches Problem in den Fällen dar, in denen keine Kühlsegel montiert werden, denn dann sind zu viele Blinddeckel an der Decke und ggf. an ungünstigen Positionen zueinander angebracht. Über die im Leerrohr verlaufende Kabelverbindung ist es zusätzlich möglich, einen Taupunkt-Fühler am Kühlsegel anzubringen und mit einer Regelung zu verbinden.

Weitere Vorteile und vorteilhafte Ausgestaltungen des Gegenstands der Erfindung sind der Beschreibung, der Zeichnung und den Ansprüchen entnehmbar. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fign. 1a, 1b: eine erste Ausführungsform der erfindungsgemäßen Wassersteckdose in einer Explosionsansicht (Fig. 1a) und in einer perspektivischen Ansicht (Fig. 1b);
- Fig. 2: einen Längsschnitt durch die Wassersteckdose von Fig. 1;
- Fig. 3: die Wassersteckdose von Fig. 1 in einem in eine Betondecke eingegossenen Zustand;
- Fig. 4: die Wassersteckdose von Fig. 3 mit abgehobenem Deckel;
- Fign. 5a-5c: ein Anschlussmodul der Wassersteckdose in zwei unterschiedlichen Längsschnitten (Fign. 5a, 5b) und in perspektivischer Ansicht (Fig. 5c);
- Fign. 6a, 6b: zwei weitere Anschlussmodule der Wassersteckdose, jeweils in perspektivischer Ansicht analog zu Fig. 5b;
- Fign. 7a-7c: eine zweite Ausführungsform der erfindungsgemäßen Wassersteckdose in einer Explosionsansicht (Fig. 1a), in einer perspektivischen Ansicht (Fig. 7b) und in einer perspektivischen Ansicht mit angeschlossenem Wellschlauch (Fig. 7c); und
- Fig. 8: einen Längsschnitt durch die Wassersteckdose von Fig. 7.

In der folgenden Beschreibung der Zeichnung werden für gleiche bzw. funktionsgleiche Bauteile identische Bezugszeichen verwendet.

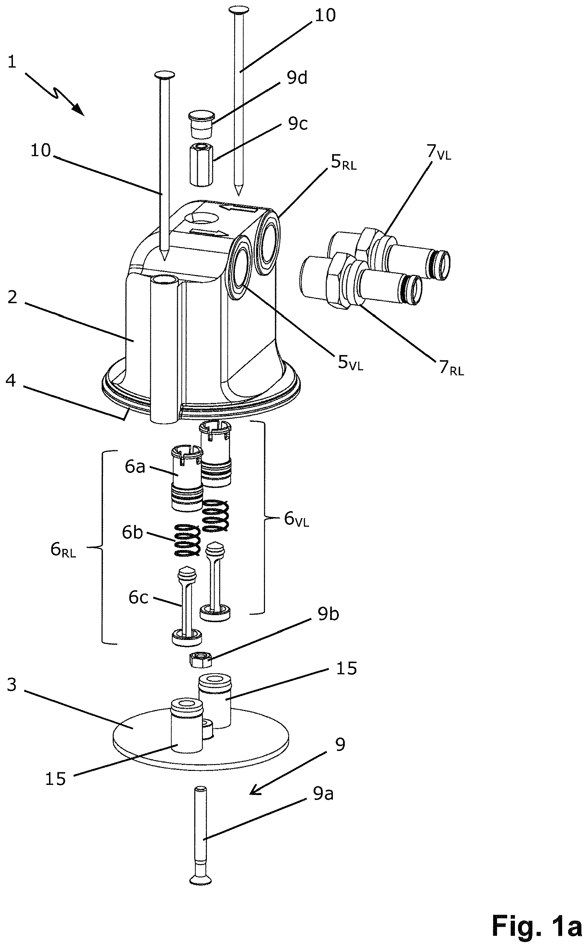

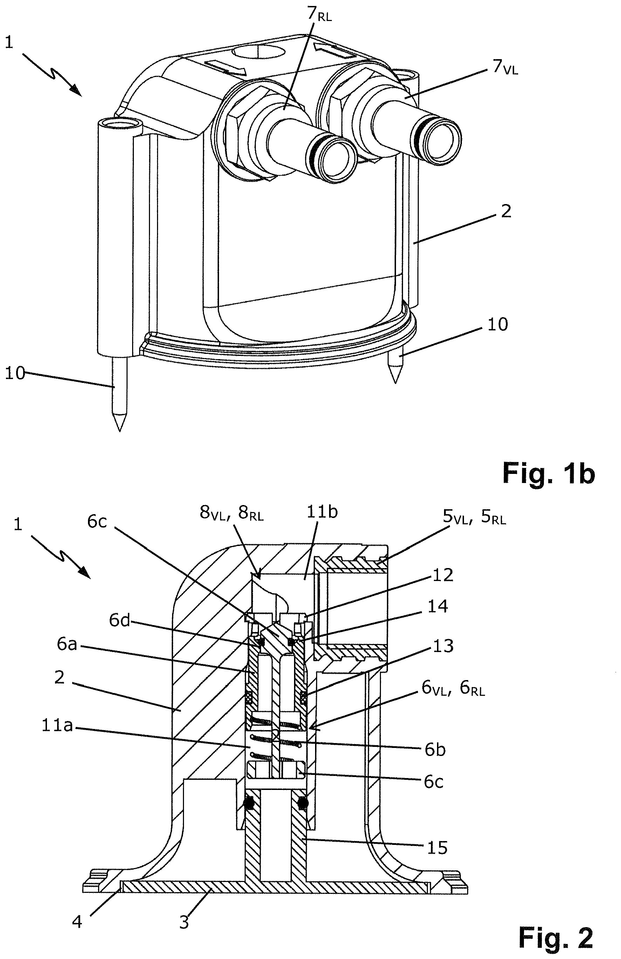

Die in **Fign. 1a****,** **1b** gezeigte Wassersteckdose **1** umfasst ein bodenseitig offenes, einstückiges topfförmiges Steckdosengehäuse **2** aus Kunststoff, einen Bodendeckel **3** aus Kunststoff zum Verschließen der Bodenöffnung **4** des Steckdosengehäuses 2, einen gehäuseseitigen Anschlussstutzen **5_{VL}**, ein Kupplungsventil **6_{VL}** und einen Anschlussnippel **7_{VL}** für eine im Steckdosengehäuse 2 verlaufende Wasser-Vorlaufleitung **8_{VL}** (Fig. 2), einen gehäuseseitigen Anschlussstutzen **5_{RL}**, ein Kupplungsventil **6_{RL}** und einen Anschlussnippel **7_{RL}** für eine im Steckdosengehäuse 2 verlaufende Wasser-Rücklaufleitung **8_{RL}** (Fig. 2), eine Demontageeinrichtung **9** zur Demontage des Bodendeckels 3, sowie zwei Nägel **10** zum Befestigen der Wassersteckdose 1 an einer Deckenverschalung.

Jedes Kupplungsventil 6_{VL}, 6_{RL} umfasst eine Ventilhülse **6a** aus Kunststoff, eine Schließfeder **6b** und einen Ventilstößel **6c** aus Kunststoff. Die Demontageeinrichtung 9 umfasst eine Schraube **9a,** eine Schraubensicherungsmutter **9b,** eine im Steckdosengehäuse 2 drehfest eingesetzte Mutter **9c** und eine Verschlusskappe **9d,** die die Mutter 9c axial fixiert.

Wie in **Fig. 2** gezeigt, sind die beiden Anschlussstutzen **5_{VL}, 5_{RL}** integral mit dem Steckdosengehäuse 2 gebildet, d.h. beim Spitzvorgang des Steckdosengehäuses 2 als Einlegeteile mit dem Kunststoffmaterial umspritzt. Die Vorlaufleitung 8_{VL} und die Rücklaufleitung 8_{RL} sind jeweils im Kunststoffmaterial des Steckdosengehäuses 2 als ein um 90° abgewinkelter Gehäusekanal mit einem zur Bodenöffnung 4 offenen axialen Kanalabschnitt **11a** und einem mantelseitig offenen radialen Kanalabschnitt **11b** ausgebildet. Die Ventilhülse 6a ist in den axialen Kanalabschnitt 11a eingeschoben, bis sie mit einem Rastvorsprung **12** entgegen der Steckrichtung im axialen Kanalabschnitt 11a verrastet ist, und über einen Dichtring **13** gegenüber dem axialen Kanalabschnitt 11a abgedichtet. Der Ventilstößel 6c umfasst einen mittleren Abschnitt, der die Ventilhülse 6a durchgreift, einen oberen Endabschnitt mit einem Dichtring **14** und einen unteren Endabschnitt, der in dem axialen Kanalabschnitt 11a verschiebbar geführt ist. Die als Druckfeder ausgeführte Schließfeder 6b ist einerseits an der Ventilhülse 6a und andererseits am Ventilstößel 6c abgestützt. Der Bodendeckel 3 ist mit einem axialen Steckvorsprung **15** in den axialen Kanalabschnitt 9a eingesteckt, bis er bündig mit dem Öffnungsrand der Bodenöffnung 4 abschließt. Der Bodendeckel 3 ist mittels der Schraube 9a am Steckdosengehäuse 2 festgeschraubt.

In Fig. 2 ist das Kupplungsventil 6_{VL}, 6_{RL} in seiner geschlossenen Ventilstellung gezeigt, in der der von der Schließfeder 6b kraftbeaufschlagte Ventilstößel 6c mit seinem Dichtring 13 an einem konischen Ventilsitz **6d** der Ventilhülse 6a anliegt und dadurch die Verbindung zwischen den beiden Kanalabschnitten 11a, 11b gesperrt ist. Die Steckvorsprünge 15 des Bodendeckels 3 sind so kurz, dass sie nicht gegen die unteren Enden der Ventilstößel 6c anstoßen.

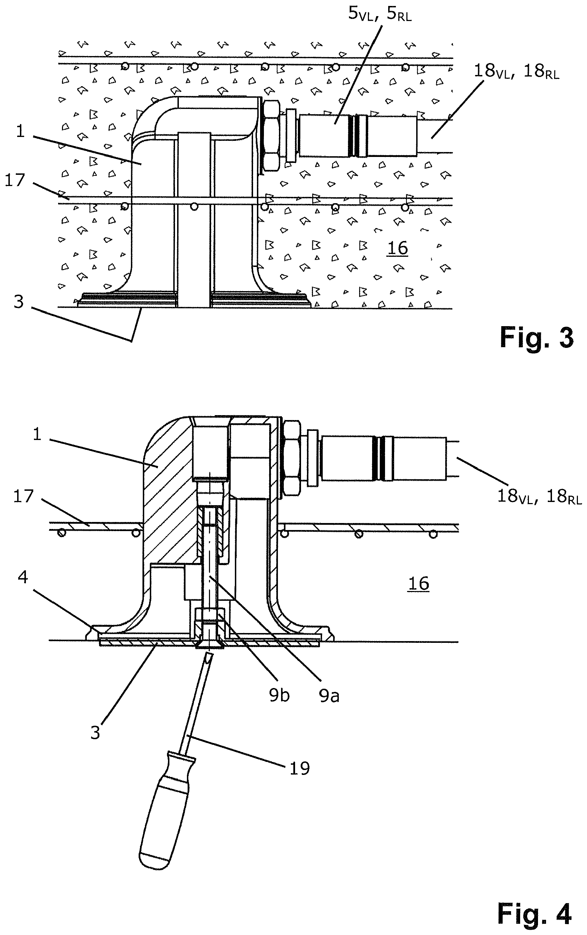

Die Wassersteckdose 1 wird mit den Nägeln 10 an einer Deckenverschalung aus Holz befestigt. **Fig. 3** zeigt die in eine Betondecke **16** zusammen mit Stahlmatten **17** einbetonierte Wassersteckdose 1, wobei die Nägel 10 bereits aus dem Steckdosengehäuse 2 herausgezogen bzw. ausgebrochen sind. Mit **18_{VL}**, **18_{RL}** sind die ebenfalls einbetonierten Vor- und Rücklauf-Wasserleitungen in der Betondecke 16 bezeichnet. Die Kupplungsventile 6_{VL}, 6_{RL} sind in ihrer geschlossenen Ventilstellung, so dass die axialen Kanalabschnitte 11a von den Vor- und Rücklauf-Wasserleitungen 18_{VL}, 18_{RL} abgesperrt sind.

Der Bodendeckel 3 schließt einerseits bündig mit dem Öffnungsrand der Bodenöffnung 4 ab und kann andererseits durch Betonreste mit dem Steckdosengehäuse 2 verklebt sein. Insbesondere kann der zwischen Bodendeckel 3 und Bodenöffnung 4 vorhandene Öffnungsspalt mit Beton gefüllt sein. Die Demontageeinrichtung 9 dient zum einfachen und leichten Abheben des Bodendeckels 3 vom Steckdosengehäuse 2. Wie in **Fig. 4** gezeigt, ist der Bodendeckel 3 auf der Schraube 9a zwischen Schraubenkopf und Schraubensicherungsmutter 9b angeordnet. Die Schraube 9a ist die in der Gehäusedecke drehfest und axial fixierte Mutter 9c eingeschraubt. Indem die Schraube 9a mittels eines Schraubendrehers **19** aus der Mutter 9c herausgedreht wird, wird der Bodendeckel 3 aus der Bodenöffnung 4 nach unten herausgedrückt.

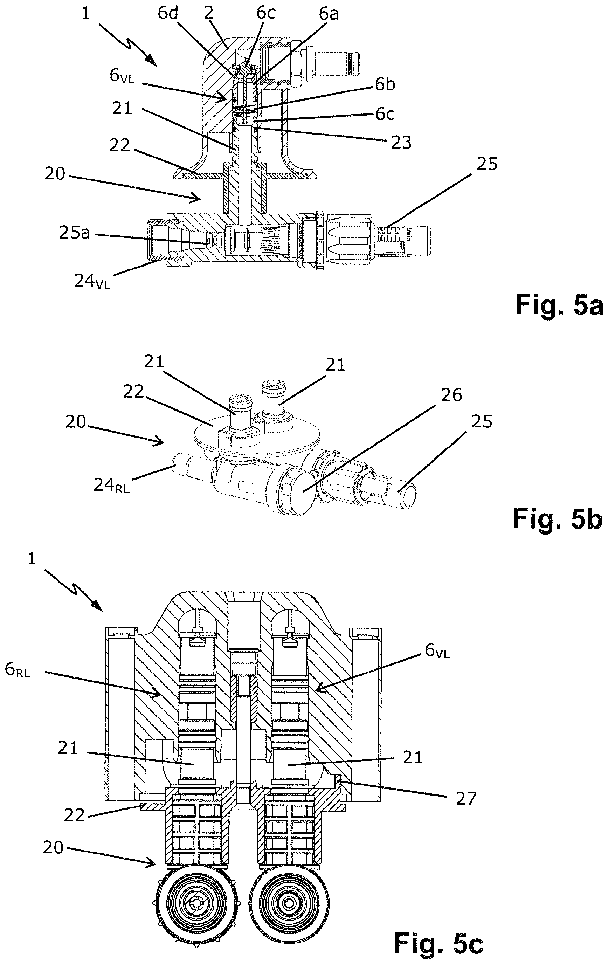

Wenn der Bodendeckel 3 entfernt ist, wird, wie in **Fign. 5a-5c** gezeigt, ein Anschlussmodul **20** mit Anschlusssteckern (Gegenstecker) **21** in die axialen Kanalabschnitte 11a eingesteckt, bis ein Bodendeckel **22** des Anschlussmoduls 20 bündig mit dem Öffnungsrand der Bodenöffnung 4 abschließt. Der Bodendeckel 22 - und damit auch das Anschlussmodul 20 - ist analog zum Bodendeckel 3 über eine Schraube 9a an der gehäuseseitigen Mutter 9c befestigt. Die Anschlussstecker 21 sind so lang, dass sie beim Einstecken die Ventilstößel 6c gegen die Kraft der Rückstellfedern 6b hochschieben und vom Ventilsitz 6d der Ventilhülse 6a abheben, wodurch die beiden Kanalabschnitte 11a, 11b miteinander verbunden sind. Über einen außenliegenden Dichtring **23** sind die Anschlussstecker 21 in den axialen Kanalabschnitten 11a abgedichtet. Das in Fig. 5 gezeigte Anschlussmodul 20 weist in einem Vorlauf-Anschlussstutzen **24_{VL}** einen Durchflussmesser **25** und in einem Rücklauf-Anschlussstutzen **24_{RL}** ein Hubventil **26** auf. Der Durchfluss wird mit einer Prallscheibe **25a** gemessen, deren durchflussabhängige Stellung über einen Anzeigestößel (nicht gezeigt) im Durchflussmesser 25 angezeigt wird. Der Bodendeckel 22 des Anschlussmoduls 20 weist eine Kodierung in Form eines Kodiervorsprungs **27** auf, um sicherzustellen, dass das Anschlussmodul 20 nur in der bzgl. Vor- und Rücklauf richtigen Stellung an das Steckdosengehäuse 2 montiert werden kann. An die Anschlussstutzen 24_{VL}, 24_{RL} wird das Kühlsegel (nicht gezeigt) angeschlossen.

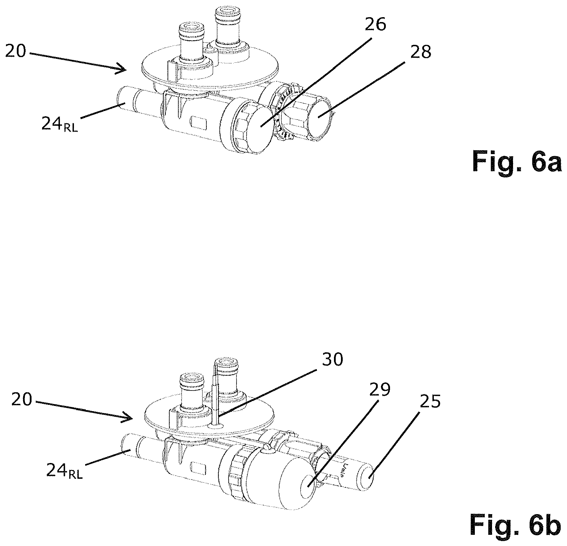

Das in **Fig. 6a** gezeigte Anschlussmodul 20 weist im Vorlauf-Anschlussstutzen 24_{VL} ein manuell betätigbares Absperrventil **28** und im Rücklauf-Anschlussstutzen 24_{RL} ein Hubventil 26 auf. Das in **Fig. 6b** gezeigte Anschlussmodul 20 weist im Vorlauf-Anschlussstutzen 24_{VL} einen Durchflussmesser 25 und im Rücklauf-Anschlussstutzen 24_{RL} ein motorisch (oder mit thermischem Stellantrieb) angetriebenes Absperrventil **29** auf, welches elektrische Zuleitungen **30** aufweist.

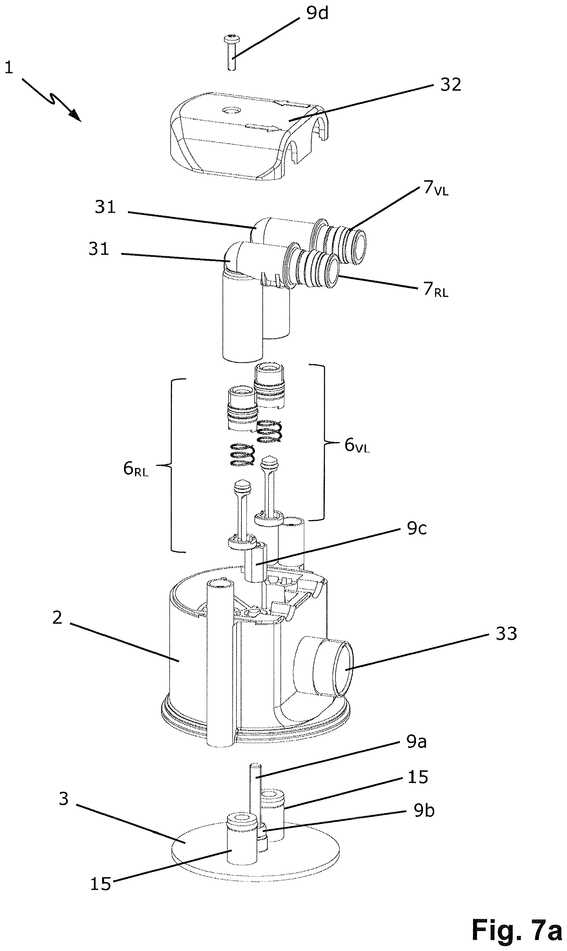

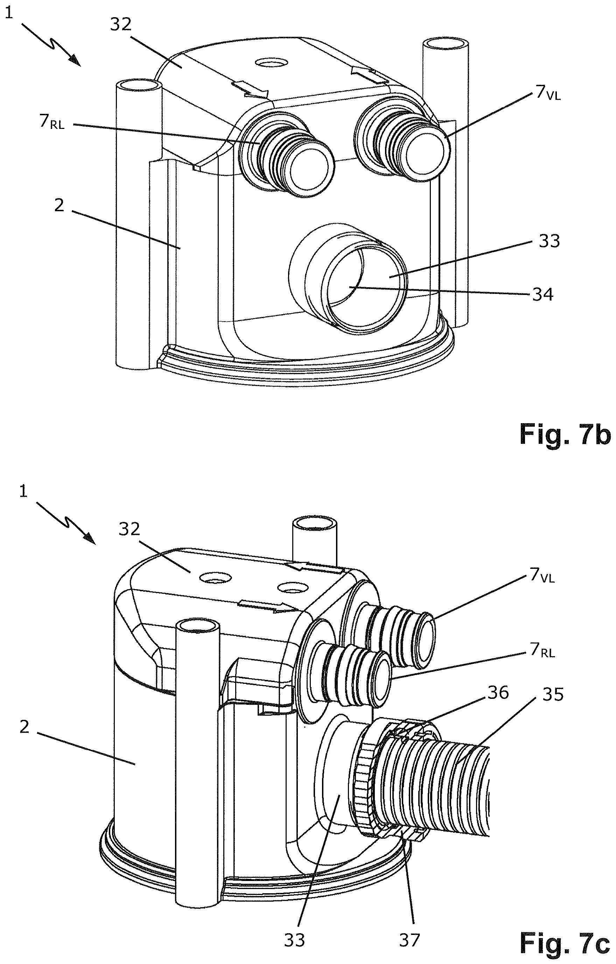

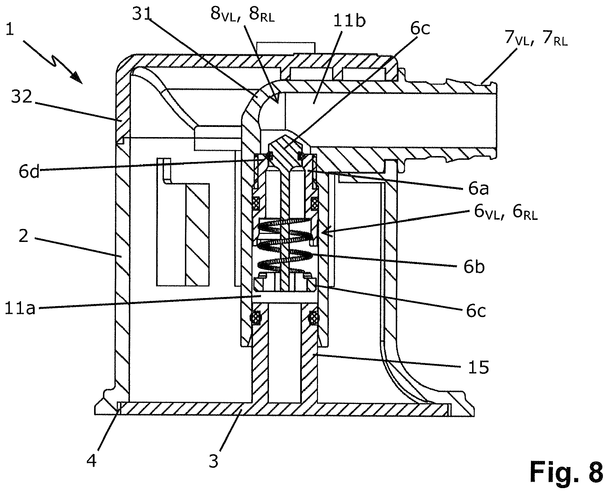

Von der Wassersteckdose der Fign. 1 und 2 unterscheidet sich die in **Fign. 7a****,** **7b** gezeigte Wassersteckdose 1 dadurch, dass hier die im Steckdosengehäuse 2 verlaufenden Vor- und Rücklaufleitungen **8_{VL}** (Fig. 8) durch 90°-Winkelröhre **31** aus Kunststoff gebildet sind, die mit dem Steckdosengehäuse 2 steckverbunden sind. Der eine Schenkel des Winkelrohrs 31 bildet den axialen Kanalabschnitt 11a, in dem das Kupplungsventil 6_{VL}, 6_{RL} eingesteckt ist, und der andere Schenkel bildet den radialen Kanalabschnitt 11b mit integral ausgebildetem Anschlussnippel 6_{VL}, 6_{RL}. Die Winkelrohre 31 werden über eine Deckenöffnung des Steckdosengehäuses 2 eingesetzt, welche dann mit einem Deckel **32** verschlossen wird. Weiterhin verläuft im Steckdosengehäuse 2 ein um 90° abgewinkelter Leerrohranschluss **33,** durch den in der Betondecke 16 verlegte Leitungen, z.B. elektrische Leitungen für das motorisch angetriebene Absperrventil 29, herausgeführt sind. Der Leerrohranschluss 33 kann zunächst noch mit einem Durchbrechboden **34** verschlossen sein, der erst bei Bedarf geöffnet wird. Wie in **Fig. 7c** gezeigt, wird ein Leerrohr **35** (z.B. ein Kunststoff-Wellschlauch) wird in den Leerrohranschluss 33 eingesteckt und mit einem O-Ring **36** und einer im Teilschnitt dargestellten Überwurfmutter **37** fixiert. In dieses einbetonierte Leerrohr 35 kann dann später eine elektrische Leitung mit Hilfe eines Zugdrahtes eingezogen werden.

## Patentansprüche

1. System aus einer einbetonierbaren Wassersteckdose (1) für ein Kühlsegel und einem Anschlussmodul (20),
wobei die Wassersteckdose (1) ein topfförmiges Steckdosengehäuse (2) aus Kunststoff mit einer Bodenöffnung (4) sowie eine Vorlaufleitung (8_{VL}) und eine Rücklaufleitung (8_{RL}) aufweist, die im Steckdosengehäuse (2) nebeneinander verlaufen und jeweils einen bodenseitig offenen axialen Leitungsabschnitt (11a) mit einem Kupplungsventil (6_{VL}, 6_{RL}) und einen mantelseitig offenen radialen Leitungsabschnitt (11b) aufweisen,
wobei die beiden Leitungsabschnitte (11a, 11b) der Vor- und Rücklaufleitungen (8_{VL}, 8_{RL}) jeweils durch ein 90°-Winkelrohr (31) gebildet sind, welches mit dem Steckdosengehäuse (2) steckverbunden ist, oder die beiden Leitungsabschnitte (11a, 11b) der Vor- und Rücklaufleitungen (8_{VL}, 8_{RL}) jeweils durch zwei im Kunststoffmaterial des Steckdosengehäuses (2) verlaufende, um 90° abgewinkelten Kanalabschnitte gebildet sind, und
wobei das Anschlussmodul (20) einen die Bodenöffnung (4) verschließenden Bodendeckel (22) mit Anschlusssteckern (21) aufweist, welche in die axialen Leitungsabschnitte (11a) einsteckbar sind und die Kupplungsventile (6_{VL}, 6_{RL}) öffnen.

2. System nach Anspruch 1, **dadurch gekennzeichnet, dass** das Kupplungsventil (6_{VL}, 6_{RL}) eine Ventilhülse (6a), welche im axialen Leitungsabschnitt (11a) montiert, insbesondere verrastet ist, einen Ventilstößel (6c) und eine Schließfeder (6b) aufweist, durch welche der Ventilstößel (6c) nach unten in eine geschlossene Ventilstellung vorgespannt ist.

3. System nach Anspruch 1 oder 2, **dadurch gekennzeichnet, dass** die Wassersteckdose (1) eine Demontageeinrichtung (9) aufweist, die einen Bodendeckel (3, 22) aus der Bodenöffnung (4) nach unten herausgedrückt.

4. System nach Anspruch 3, **dadurch gekennzeichnet, dass** die Demontageeinrichtung (9) eine Schraube (9a), auf der der Bodendeckel (3, 22) drehbar, aber axial unverschiebbar gehalten ist, und eine im Steckdosengehäuse (2) drehfest und axial fixierte Mutter (9c) aufweist, in die die Schraube (9a) eingeschraubt ist.

5. System nach einem der vorhergehenden Ansprüche, **dadurch gekennzeichnet, dass** das Anschlussmodul (20) mindestens eine der folgenden Komponenten im Vor- oder Rücklauf aufweist: Durchflussmesser (24), Hubventil (25), manuell betätigbares Absperrventil (28), motorisch oder mit thermischem Stellantrieb betätigbares Absperrventil (29).

6. System nach einem der vorhergehenden Ansprüche, **dadurch gekennzeichnet, dass** das Anschlussmodul (20), insbesondere sein Bodendeckel (22), eine Kodierung (27) aufweist, die eine bzgl. Vor- und Rücklauf richtige Montage des Anschlussmoduls (20) in der Bodenöffnung (4) des Steckdosengehäuses (2) sicherstellt.

7. System nach einem der vorhergehenden Ansprüche, **dadurch gekennzeichnet, dass** das Steckdosengehäuse (2) einen Leerrohranschluss (33) aufweist, welcher zum Gehäuse offen ausgeführt oder mit einem Durchbrechboden (34) versehen ist.

## Claims

1. System comprising a water socket (1) that can be embedded in concrete for a cooling panel and a connection module (20),
wherein the water socket (1) comprises a pot-shaped socket housing (2) of plastic material having a bottom opening (4) as well as a supply line (8_{VL}) and a return line (8_{RL}), which extend next to one another in the socket housing (2) and each have an axial line section (11a) that is open at the bottom and comprises a coupling valve (6_{VL}, 6_{RL}) and a radial line section (11b) that is open on the peripheral side,
wherein the two line sections (11a, 11b) of the supply and return lines (8_{VL}, 8_{RL}) are each formed by a 90° angled tube (31) that is plug-connected to the plug housing (2), or the two line sections (11a, 11b) of the supply and return lines (8_{VL}, 8_{RL}) are each formed by two channel sections that are angled by 90° and extend in the plastic material of the plug housing (2), and
wherein the connection module (20) comprises a bottom cover (22) that closes the bottom opening (4) and has connector plugs (21) that can be inserted into the axial line sections (11a) and open the coupling valves (6_{VL}, 6_{RL}).

2. System according to claim 1, **characterized in that** the coupling valve (6_{VL}, 6_{RL}) comprises a valve sleeve (6a) that is mounted, in particular locked, in the axial line section (11a), a valve plunger (6c) and a closing spring (6b) which pretensions the valve plunger (6c) in a downward direction into a closed valve position.

3. System according to claim 1 or 2, **characterized in that** the water socket (1) comprises a dismantling device (9) that pushes a bottom cover (3, 22) in a downward direction out of the bottom opening (4).

4. System according to claim 3, **characterized in that** the dismantling device (9) comprises a screw (9a), on which the bottom cover (3, 22) is held in a rotatable but axially non-displaceable manner, and a nut (9c) that is non-rotatably and axially fixed in the plug housing (2) into which the screw (9a) is screwed.

5. System according to any one of the preceding claims, **characterized in that** the connection module (20) comprises at least one of the following components in the supply line or return line: flow meter (24), lift valve (25), manually operable shut-off valve (28), shut-off valve (29) that can be operated by a motor or by a thermal actuator.

6. System according to any one of the preceding claims, **characterized in that** the connection module (20), in particular its bottom cover (22), comprises an encoding (27) that ensures correct mounting with respect to supply line and return line of the connection module (20) in the bottom opening (4) of the plug housing (2).

7. System according to any one of the preceding claims, **characterized in that** the plug housing (2) comprises an empty pipe connection (33) that is designed to be open towards the housing or is provided with a break-through bottom (34).

## Revendications

1. Système composé d'une prise d'eau (1) encastrable dans du béton, destinée à un voile de refroidissement, et d'un module de raccordement (20),
ladite prise d'eau (1) présentant un boîtier (2) en matière plastique en forme de pot, dont le fond est percé d'une ouverture (4), ainsi qu'un conduit d'arrivée (8_{VL}) et un conduit de retour (8_{RL}) qui s'étendent en juxtaposition dans ledit boîtier (2) de la prise d'eau et comportent, à chaque fois, un tronçon axial (11a) ouvert côté fond, muni d'une soupape de couplage (6_{VL}, 6_{RL}), et un tronçon radial (11b) ouvert côté enveloppe,
sachant que les deux tronçons (11a, 11b) desdits conduits (8_{VL}, 8_{RL}) d'arrivée et de retour sont constitués, respectivement, d'une tubulure (31) coudée à 90° et reliée, par emboîtement, audit boîtier (2) de la prise d'eau, ou bien que lesdits deux tronçons (11a, 11b) desdits conduits (8_{VL}, 8_{RL}) d'arrivée et de retour sont formés, respectivement, par deux segments de canaux coudés à 90° et parcourant la matière plastique dudit boîtier (2) de ladite prise d'eau, et
sachant que ledit module de raccordement (20) est pourvu d'un couvercle inférieur (22) obturant l'ouverture (4) pratiquée dans le fond, et comportant des embouts enfichables de raccordement (21) qui peuvent être emboîtés dans lesdits tronçons axiaux (11a) des conduits, et ouvrent lesdites soupapes de couplage (6_{VL}, 6_{RL}).

2. Système selon la revendication 1, **caractérisé par le fait que** la soupape de couplage (6_{VL}, 6_{RL}) comprend une douille (6a) montée, notamment crantée dans le tronçon axial (11a) de conduit, un poussoir (6c) et un ressort de fermeture (6b) par l'intermédiaire duquel ledit poussoir (6c) de la soupape est précontraint, vers le bas, jusqu'à une position fermée de ladite soupape.

3. Système selon la revendication 1 ou 2, **caractérisé par le fait que** la prise d'eau (1) est dotée d'un dispositif de démontage (9) par lequel un couvercle inférieur (3, 22) est expulsé, vers le bas, hors de l'ouverture (4) pratiquée dans le fond.

4. Système selon la revendication 3, **caractérisé par le fait que** le dispositif de démontage (9) comprend une vis (9a) sur laquelle le couvercle inférieur (3, 22) est retenu avec faculté de rotation, mais avec immobilité axiale, et un écrou (9c) qui est logé dans le boîtier (2) de la prise d'eau avec verrouillage rotatif et blocage à demeure dans le sens axial, et dans lequel ladite vis (9a) est vissée.

5. Système selon l'une des revendications précédentes, **caractérisé par le fait que** le module de raccordement (20) comprend, dans le brin d'arrivée ou de retour, au moins l'un des éléments structurels suivants : un débitmètre (24), une soupape de levage (25), une vanne d'isolement (28) actionnable manuellement, une vanne d'isolement (29) manoeuvrable en mode motorisé ou à l'aide d'un actionneur thermique.

6. Système selon l'une des revendications précédentes, **caractérisé par le fait que** le module de raccordement (20), en particulier son couvercle inférieur (22), est muni d'un codage (27) qui assure un montage correct, vis-à-vis des brins d'arrivée et de retour, dudit module de raccordement (20) dans l'ouverture (4) pratiquée dans le fond du boîtier (2) de la prise d'eau.

7. Système selon l'une des revendications précédentes, **caractérisé par le fait que** le boîtier (2) de la prise d'eau est pourvu d'un raccord (33) de tubulure vide, qui présente une réalisation ouverte en direction dudit boîtier, ou est doté d'un fond perforé (34).
